# EUROPÄISCHE PATENTSCHRIFT

(11) **EP 0 566 580 B1**
(45) Veröffentlichungstag und Bekanntmachung des Hinweises auf die Patenterteilung: **25.09.1996**
(21) Anmeldenummer: 91920014.7
(22) Anmeldetag: 15.11.1991
(51) Int. Cl.: B23Q 11/00, B27B 5/38, G05G 5/00, H02K 7/14

(54) **ELEKTRISCHE HANDDREHWERKZEUGMASCHINE, INSBESONDERE HANDKREISSÄGE**
ELECTRIC ROTARY HAND TOOL, ESPECIALLY HAND CIRCULAR SAW
MACHINE-OUTIL TOURNANTE ELECTRIQUE A MAIN, EN PARTICULIER SCIE CIRCULAIRE A MAIN

(30) Priorität: 09.01.1991 DE 4100412
(43) Veröffentlichungstag der Anmeldung: 27.10.1993
(73) Patentinhaber: ROBERT BOSCH GMBH, 70442 Stuttgart (DE)
(72) Erfinder: SCHILLING, Rainer, D-7000 Stuttgart 80 (DE)
(86) Internationale Anmeldenummer: DE9100885
(87) Internationale Veröffentlichungsnummer: WO9211972

(56) Entgegenhaltungen:
- DE-A- 2 948 080
- DE-A- 3 819 181
- FR-A- 860 195
- FR-A- 2 575 242
- US-A- 2 539 468
- US-A- 2 702 098
- US-A- 2 993 518

## Beschreibung

Die Erfindung geht aus von einer elektrischen Handdrehwerkzeugmaschine, insbesondere Handkreissäge, der im Oberbegriff des Anspruchs 1 definierten Gattung.

Bei solchen Handdrehwerkzeugmaschinen dient die Stirnseite der Maschinengehäusekappe vorteilhaft als Aufstellfläche zum Aufsetzen der Maschine beim Wechseln des Drehwerkzeugs. Die Aufstellfläche ist dabei so ausgebildet, daß die Maschine darauf im stabilen Gleichgewicht stehenbleibt. Um das Drehwerkzeug zu wechseln, muß eine Spannschraube, die das Drehwerkzeug an ein drehfest auf der Antriebsspindel sitzendes Formschlußelement andrückt, gelöst werden. Dabei muß ein Element in dem Antriebsstrang: Antriebsmotor - Abtriebswelle - Getriebe - Antriebsspindel mittels der Spindelarretierung gegen Drehung gesichert werden.

Durch die US-A-2 993 518 ist eine Handkreissäge bekannt, die einen am Maschinengehäuse radial vorstehenden, manuell eindrückbaren Raststift aufweist, bei dessen Betätigung die Antriebsspindel arretiert wird, so daß damit die auf der Antriebsspindel sitzende Sägeblatt-Spannschraube bzw. -mutter lösbar ist, ohne daß sie sich dabei mitdrehen kann. Diese Lösung hat den Nachteil, daß der Raststift von Hand während des Lösens bzw. Spannens der Spannschraube gedrückt gehalten werden muß, weil der Raststift entgegen der Kraft einer Feder in seiner Löse- bzw. Ruheposition gehalten wird, damit ein Betätigen der Spindelarretieren während des Betriebes der Handkreissäge erschwert wird.

Durch die US-A-2 702 098 ist eine Handwerkzeugmaschine bekannt, deren Spindelarretierung mittels eines axial zum Motor verschiebbaren Druckknopfs betätigbar ist. Auch hier muß der Druckknopf von Hand betätigt gehalten werden, solange die Spindel arretiert bleiben soll. Zum Betätigen des Druckknopfs durch Aufsetzen der Handwerkzeugmaschine auf eine feste Unterlage muß die Maschine festgehalten werden, weil sie aufgrund der Unebenheit der zum Druckknopf benachbarten Stirnfläche nicht standsicher ist. Außerdem ist ein Betätigen dieser Spindelarretierung von Hand bei gleichzeitigem Werkzeugwechsel ergonomisch ungünstig und unsicher, weil beide Hände die Maschine verhältnismäßig weit voneinander entfernt halten und dabei hantieren müssen.

### Vorteile der Erfindung

Die erfindungsgemäße elektrische Handdrehwerkzeugmaschine mit den Merkmalen des Anspruchs 1 hat demgegenüber den Vorteil, daß die Spindelarretierung automatisch betätigt wird, wenn zum Wechseln des Drehwerkzeugs die Maschine auf die Aufstellfläche aufgesetzt wird. Damit ist eine wesentlich verbesserte Ergonomie beim Wechseln des Drehwerkzeugs verbunden, da der Bedienende nunmehr beide Hände frei hat für das Lösen der Spannschraube und Wechseln des Drehwerkzeugs. Wird die Maschine wieder abgehoben, so schiebt die Rückstellfeder automatisch den Raststift zurück und über die Kupplung von Raststift und Betätigungsschieber auch letzteren wieder zurück, so daß einerseits die Arretierung der Antriebsspindel aufgehoben ist und andererseits das Ende des Betätigungsschiebers wieder aus der Abdeckhaube heraus über die Aufstellfläche vorsteht.

Durch die in den weiteren Ansprüchen aufgeführten Maßnahmen sind vorteilhafte Weiterbildungen und Verbesserungen der im Anspruch 1 angegebenen Handdrehwerkzeugmaschine möglich.

Gemäß einer bevorzugten Ausführungsform der Erfindung läßt sich die Kupplung zwischen Raststift und Betätigungsschieber dadurch realisieren, daß. Der Verschiebekolben eine unter einem spitzen Winkel zur Kolbenachse verlaufende Verschieberampe trägt, an welcher der Betätigungsschieber mit einer unter einem spitzen Winkel zur Schieberachse verlaufenden Betätigungsflache anliegt. Der koaxial zum Verschiebekolben angeordnete Raststift ist über die Rückstellfeder mit dem Verschiebekolben gekoppelt, wobei sich die Rückstellfeder mit radial nach außen gerichteter Rückstellkraft einerseits am Maschinengehäuse und andererseits an einem am Raststift befindlichen Federteller abstützt.

Um über die automatische Spindelarretierung eine Fehlbedienung der Maschine zu verhindern, z.B. dadurch, daß die Spindelarretierung bei laufender Maschine ausgelöst wird oder um die Maschine jederzeit, auch bei nichtflutender Stellung von Raststift und Rastnut in einer stabilen Standlage auf der Aufstellfläche aufstellen zu können, ist gemäß einer weiteren Ausführungsform der Erfindung der Raststift im Verschiebekolben axial verschieblich geführt und zwischen Verschiebekolben und Raststift eine Druckfeder angeordnet, deren Federkraft größer ist als die Rückstellkraft der Rückstellfeder. Infolge der Druckfeder kann bei Auslösen der Spindelarretierung der Verschiebekolben sich relativ zu dem Raststift verschieben, wenn der Raststift z.B. infolge der rotierenden Nutscheibe nicht in die Nut findet, so daß zwar der Betätigungsschieber in das Maschinengehäuse eingeschoben wird, der Raststift aber nicht in die Nut der Nutscheibe einfällt. Erst wenn das Hemmnis für den Raststift aufgehoben ist, z.B. durch Stillstand des Motors und fluchtender Stellung von Raststift und Rastnut, sorgt die Druckfeder für das Einschieben des Raststiftes in die Rastnut und damit für die Festlegung der Spindel gegen Drehung.

### Zeichnung

Die Erfindung ist anhand eines in der Zeichnung dargestellten Ausführungsbeispiels in der nachfolgenden Beschreibung näher erläutert. Es zeigen:
- Fig. 1: ausschnittweise einen Längsschnitt einer Handkreissäge bei ausgerückter Spindelarretierung,
- Fig. 2: ausschnittweise einen Längsschnitt der Handkreissäge in Fig. 2 mit eingerückter Spindelarretierung,
- Fig. 3: einen Längsschnitt einer Nutscheibe der Spindelarretierung in der Handkreissäge gemäß Fig. 1 und 2,
- Fig. 4: eine Draufsicht der Nutscheibe in Richtung Pfeil IV in Fig. 3.

### Beschreibung der Ausführungsbeispiele

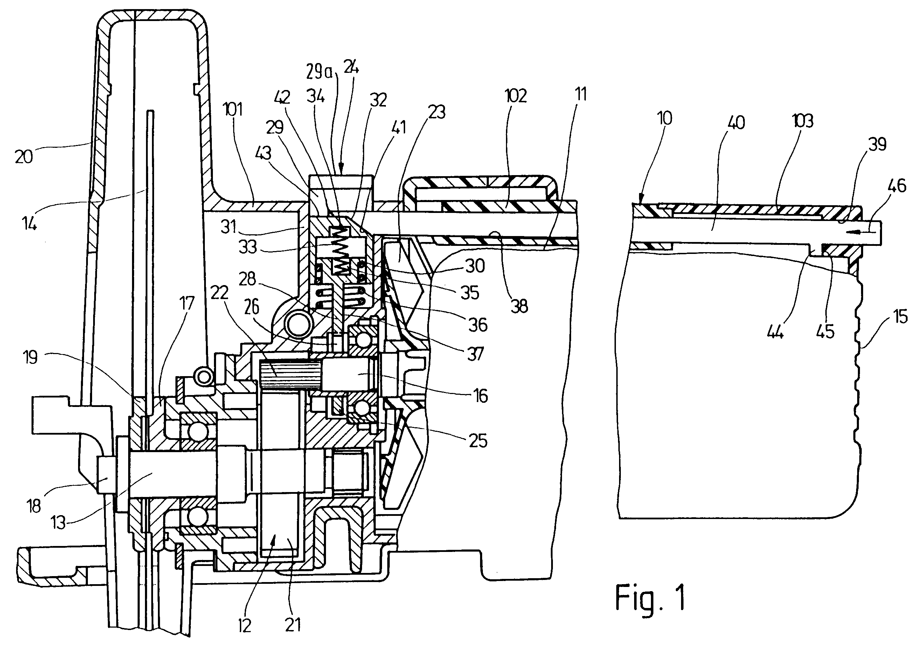

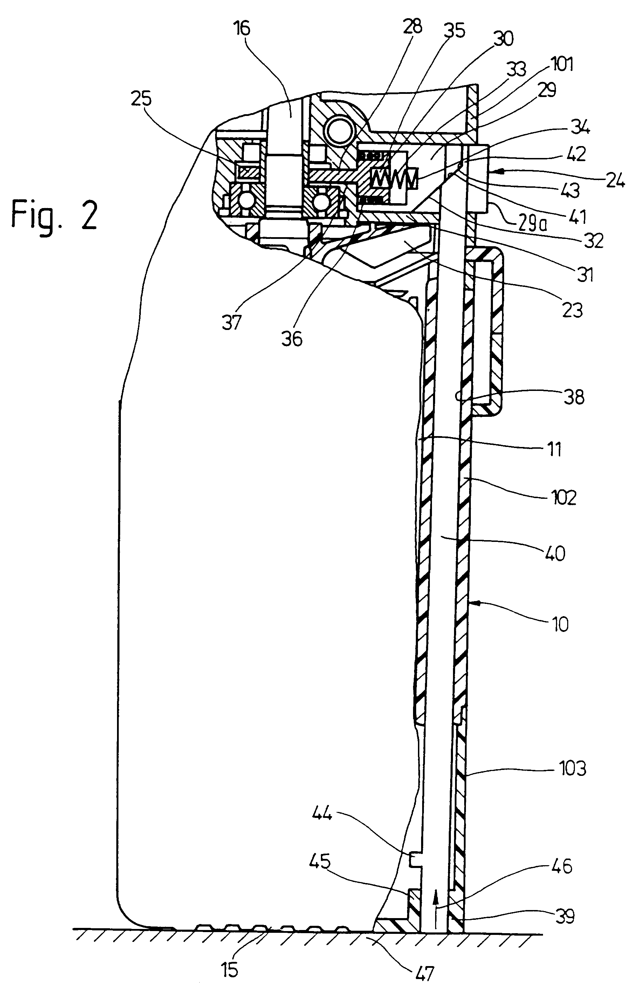

Die in Fig. 1 und 2 ausschnittweise im Längsschnitt dargestellte Handkreissäge als Beispiel einer elektrischen Handdrehwerkzeugmaschine weist ein dreiteiliges Maschinengehäuse 10 auf, das einen elektrischen Antriebsmotor 11, ein Übersetzungsgetriebe 12 und eine Antriebsspindel 13 aufnimmt. Das Maschinengehäuse 10 ist dreiteilig ausgeführt und weist ein metallisches Vorderteil 101, das einen Handschutz 20 für ein auf der Antriebsspindel 13 drehfest gehaltenes Sägeblatt 14 trägt, ein zylindrisches Mittelteil 102 aus Kunststoff, an dem der Antriebsmotor 11 befestigt ist, und eine an dem Mittelteil stirnseitig angesetzte Abdeckhaube 103 aus Kunststoff auf, deren Stirnfläche als Aufstellfläche 15 zum Aufstellen der Maschine im stabilen Gleichgewichtszustand ausgebildet ist. Die Antriebsspindel 13 ist ebenso wie die Abtriebswelle 16 des elektrischen Antriebsmotors 11 im Vorderteil 101 des Maschinengehäuses 10 drehend gelagert und trägt drehfest ein Formschlußelement 17, an dem das Sägeblatt 14 kraftschlüssig angepreßt ist. Mittels einer auf der Antriebsspindel 13 aufgeschraubten Spannschraube 18 wird das Sägeblatt 14 über eine Spannscheibe 19 auf dem Formschlußelement 17 axial festgespannt. Das Übersetzungsgetriebe 12 weist ein auf der Antriebsspindel 13 drehfest sitzendes Zahnrad 21 und ein mit dem Zahnrad 21 kämmendes Antriebsritzel 22 auf, das unmittelbar auf der Abtriebswelle 16 sitzt oder über ein weiteres Zahnrad mit der Abtriebswelle 16 in Drehverbindung steht. Von dem Antriebsmotor 11 ist außer der Abtriebswelle 16 noch das auf der Abtriebswelle 16 sitzende Lüfterrad 23 in Fig. 1 und 2 zu sehen.

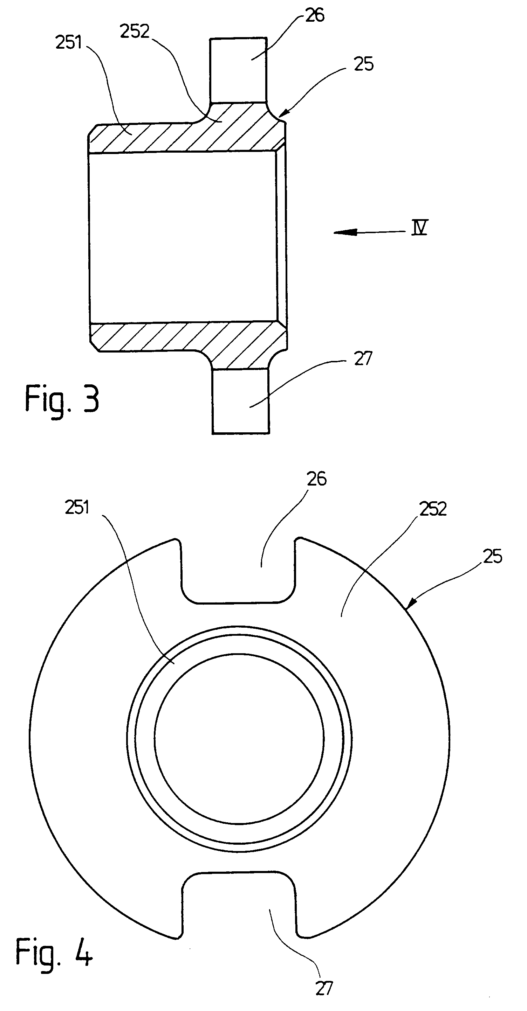

Zur Arretierung der Antriebsspindel 13 zwecks Wechseln des Sägeblatts 14 ist eine Spindelarretierung 24 vorgesehen, welche im eingerückten Zustand die Antriebsspindel 13 undrehbar festlegt. Die Spindelarretierung 24 weist eine auf der Abtriebswelle 16 des Antriebsmotors 11 drehfest sitzende Nutscheibe 25 auf. Die Nutscheibe 25 ist in Fig. 3 und 4 vergrößert dargestellt, und zwar jeweils im Längsschnitt bzw. in Draufsicht. Die Nutscheibe 25 besteht dabei aus einer auf die Abtriebswelle 16 aufschiebbaren Muffe 251 und einem mit der Muffe 251 einstückigen Radialflansch 252. In dem Radialflansch 252 sind an dessen Flanschrand zwei Rastnuten 26,27 diametral angeordnet. Zur Spindelarretierung 24 gehört ferner ein Raststift 28, der mit seinem freien Ende in die Rastnut 26 oder 27 einzugreifen vermag und damit eine Drehung der Abtriebswelle 16 unterbindet. Der Raststift 28 ist in einem Verschiebekolben 29 axial verschieblich geführt, wobei an dem von der Nutscheibe 25 abgekehrten Ende des Raststiftes 28 ein Federteller 30 einstückig an dem Raststift 28 angespritzt ist, welcher zugleich der Führung des Raststiftes 28 in dem im unteren Teil hohl ausgebildeten Verschiebekolben 29 dient. Der Verschiebekolben 29 ist in einer radial ausgerichteten Gehäusetasche 31 im Vorderteil 101 des Maschinengehäuses 10 axial verschieblich geführt und trägt eine Verschieberampe 32, die in einem Winkel von 45° zur Kolbenachse angeordnet ist, und zwar so, daß eine senkrecht zur Kolbenachse auf die Verschieberampe 32 einwirkende Kraft eine Verschiebung des Verschiebekolbens 29 in Richtung zur Nutscheibe 25 hin bewirkt. Zwischen dem Federteller 30 des Raststiftes 28 und dem Verschiebekolben 29 stützt sich eine Druckfeder 33 ab, die an beiden Stirnseiten in konzentrischen Sackbohrungen 34,35 im Verschiebekolben 29 und Federteller 30 geführt ist. Zwischen dem Federteller 30 und dem Grund der Gehäusetasche 31 stützt sich eine Rückstellfeder 36 ab. Die Rückstellfeder 36 ist an ihrem einen Ende auf einer Zentrierung am Federteller 30 geführt. Die Rückstellfeder 36 umgibt koaxial den Raststift 28, der durch eine Bohrung 37 am Grunde der Gehäusetasche 31 hindurchtritt und bei ausgerückter Spindelarretierung 24, wie sie in Fig. 1 dargestellt ist, unmittelbar vor dem Flansch 252 der Nutscheibe 25 in radialer Ausrichtung zu diesem steht.

Zum Einrücken der Spindelarretierung 24 ist in einer Führung 38 am Mittelteil 102 des Maschinengehäuses 10 und in einer Führung 39 an der Abdeckhaube 103 im Innern des Maschinengehäuses 10 ein Betätigungsschieber 40 axial verschieblich geführt, dessen Verschieberichtung rechtwinklig zur Verschieberichtung oder Kolbenachse des Verschiebekolbens 29 verläuft. An seinem zum Verschiebekolben 29 weisenden Ende trägt der Betätigungsschieber 40 eine Betätigungsfläche 41, die unter einem Winkel von 45° zur Achse des Betätigungsschiebers 40 und parallel zur Verschieberampe 32 am Verschiebekolben 29 verläuft. Unter der Wirkung der Rückstellfeder 36, die über die Druckfeder 33 den Verschiebekolben 29 belastet, liegt an dieser Betätigungsfläche 41 die Verschieberampe 32 des Verschiebekolbens 29 an. Eine Verschiebung des Betätigungsschiebers 40 und des Verschiebekolbens 29 wird durch eine Arretiernase 42 am Betätigungsschieber 40 verhindert, die über eine am Verschiebekolben 29 in Fortführung der Verschieberampe 32 rechtwinklig zur Kolbenachse verlaufende Stoppfläche 43 greift. An seinem vom Verschiebekolben 29 abgekehrten Ende ragt der Betätigungsschieber 40 aus der Abdeckhaube 103 des Maschinengehäuses 10 heraus und steht über die Aufstellfläche 15 vor. Ein Herausfallen oder Herausziehen des Betätigungsschiebers 40 aus den Führungen 38,39 wird durch einen am Betätigungsschieber 40 radial wegstehenden Nocken 44 verhindert, der in der in Fig. 1 dargestellten Ausrückstellung der Spindelarretierung 24 an einem an der Führung 39 ausgebildeten Anschlag 45 anliegt.

In der in Fig. 1 dargestellten Ausrückstellung der Spindelarretierung 24 wird der Raststift 28 von der Rückstellfeder 36 außer Eingriff mit den Rastnuten 26,27 in der Nutscheibe 25 gehalten. Zugleich wird von der Rückstellfeder 36 über die Druckfeder 33 der Verschiebekolben 29 in radialer Richtung nach außen belastet, wodurch über die Verschieberampe 32 und die Betätigungsfläche 41 der Betätigungsschieber 40 mit seinem Nocken 44 gegen den Anschlag 45 gedrückt wird. Die Nutscheibe 25 kann frei drehen und die Handkreissäge befindet sich in ihrem Betriebszustand.

Zum Wechseln des Sägeblattes 14 wird die Handkreissäge mit ihrer Aufstellfläche 15 an der Abdeckhaube 103 auf einen mit 47 angedeuteten Tisch od.dgl. aufgesetzt, wo sie in stabiler Gleichgewichtslage stehenbleibt. Durch das Aufsetzen wird von dem Gewicht der Handkreissäge der Betätigungsschieber 40 in Richtung Pfeil 46 in Fig. 1 in das Maschinengehäuse 10 hineingeschoben, bis das Ende des Betätigungsschiebers 40 in der Ebene der Abstellfläche 15 zu liegen kommt. Eine weitere Verschiebebewegung des Betätigungsschiebers 40 wird durch Auflaufen der Arretiernase 42 an der Wand der Gehäusetasche 31 begrenzt. Dadurch wird verhindert, das Betätigungsfläche 41 und Verschieberampe 32 außer Eingriff kommen. Durch diese Verschiebebewegung des Betätigungsschiebers 40 wird über die Betätigungsfläche 41 am Betätigungsschieber 40 und die Verschieberampe 32 am Verschiebekolben 29 letzterer in Radialrichtung zur Abtriebswelle 16 hin verschoben. Steht dem Raststift 28 eine der beiden Rastnuten 26,27 in der Nutscheibe 25 gegenüber, so wird der Raststift 28 über die Druckfeder 33 in die entsprechende Rastung 26 bzw. 27 eingeschoben. Damit ist die mit der Abtriebswelle 16 drehfest verbundene Nutscheibe 25 gegen Drehung blockiert. Damit ist der gesamte Antriebsstrang: Abtriebswelle 16 - Übersetzungsgetriebe 12 - Antriebsspindel 13 gegen Drehung gesichert. Die Spannschraube 18 auf der Antriebsspindel 13 kann problemlos gelöst und das Sägeblatt 14 gewechselt werden.

Steht in dem vorstehend beschriebenen Fall der Auslösung der Spindelarretierung 24 dem Raststift 28 keine der beiden Rastnuten 26,27 gegenüber, so ist der Raststift 28 durch die Nutscheibe 25 an einer Verschiebung gehindert. Die von dem Betätigungsschieber 40 ausgelöste Verschiebung des Verschiebekolbens 29 bewirkt nur ein Zusammendrücken der Druckfeder 33. Erst wenn durch Drehen der Antriebsspindel 13 die Nutscheibe 25 so weit gedreht wird, daß wiederum der Raststift 28 und eine der Rastnuten 26,27 miteinander fluchten, schiebt die Druckfeder 33 den Raststift 28 in die Rastnut 26 bzw. 27 ein. Damit ist der Einrückvorgang der Spindelarretierung 24 beendet.

Nach Wechseln des Sägeblattes 14 und Festziehen der Spannschraube 18 wird die Handkreissäge von ihrer Aufstellfläche 15 abgehoben. Unter der Wirkung der Rückstellfeder 36 wird der Raststift 28 aus der Rastnut 26 bzw. 27 der Nutscheibe 25 ausgeschoben und zugleich über die steifere Druckfeder 33 der Verschiebekolben 29 in der Gehäusetasche 31 nach außen geschoben. Über die Verschieberampe 32 und die Betätigungsfläche 41 wird der Betätigungsschieber 40 in seine in Fig. 1 dargestellte Grundstellung zurückgeschoben, in welchem er mit seinem Ende über die Aufstellfläche 15 vorsteht.

Die beschriebene Spindelarretierung 24 bietet gleichzeitig einen Schutz gegen Fehlbedienung, wenn beispielsweise bei laufendem Antriebsmotor 11 der Betätigungsschieber 40 in Richtung Pfeil 46 versehentlich oder mutwillig eingeschoben wird. Auch in diesem Fall findet der Raststift 28 bei der einsetzenden Verschiebebewegung des Verschiebekolbens 29 keine der Rastnuten 26,27 zum Einrasten vor und wird durch die rotierende Nutscheibe 25 an einer Axialverschiebung gehindert. Wie beschrieben, drückt sich nunmehr die Druckfeder 33 zusammen, so daß trotz in das Maschinengehäuse 10 eingeschobenem Betätigungsschieber 40 die Spindelarretierung 24 ausgerückt bleibt.

Der Verschiebekolben 29 ist zusätzlich so ausgebildet, daß er in seiner unverschobenen Grundstellung mit seiner Stirnfläche 29a aus der Gehäusetasche 31 über die Wand des Gehäusevorderteils 101 hinaus vorsteht. Dadurch kann die Spindelarretierung 24 auch direkt durch Fingerdruck auf den Verschiebekolben 29 ausgelöst werden, wenn eine geeignete Stellfläche für das Aufstellen der Maschine am Arbeitsplatz fehlt.

## Patentansprüche

1. Elektrische Handdrehwerkzeugmaschine (1), insbesondere Handkreissäge, mit einem auf einer Antriebsspindel (13) festspannbaren Drehwerkzeug (14), insbesondere Kreissägeblatt, mit einem Antriebsmotor, dessen Abtriebswelle (16) über ein Getriebe (12) mit der Antriebsspindel (13) gekoppelt ist, mit einem Maschinengehäuse (10) und mit einer manuell einschaltbaren Spindelarretierung (24) zum Festlegen der Antriebsspindel (13) beim Wechseln des Drehwerkzeugs (14), die eine drehfest auf der Abtriebswelle (16) oder Antriebsspindel (13) sitzenden Nutscheibe (25) mit mindestens einer Rastnut (26, 27) und einen mittels Fingerdruck bedienbaren, radial aus dem Maschinengehäuse (10) ragenden, druckknopfartigen Verschiebekolben (29) und einen in die Rastnut (26, 27) gegen eine Rückstellfeder (36) einschiebbaren Raststift (28) aufweist, dadurch gekennzeichnet, daß außer dem Verschiebekolben (29), der als erstes Einschaltmittel der Spindelarretierung (24) dient, quer zu diesem ein über eine Aufstellfläche (15) am Maschinengehäuse (10) vorstehender Betätigungsschieber (40), der als zweites Einschaltmittel der Spindelarretierung (24) dient, im Maschinengehäuse (10) axial verschieblich gehalten ist und daß der Betätigungsschieber (40) mit dem Raststift (28) derart gekoppelt ist, daß bei Axialverschiebung des Betätigungsschiebers (40) bis hinter die Aufstellfläche (15) der Raststift (28) bei fluchtender Rastnutstellung in die Rastnut (26, 27) eingeschoben wird, so daß wahlweise manuell über den Verschiebekolben (29) und/oder durch das Eigengewicht der Handdrehwerkzeugmaschine (1) durch deren Aufsetzen auf eine Aufstellfläche die Spindelarretierung betätigbar ist.

2. Elektrische Handdrehwerkzeugmaschine nach Anspruch 1, dadurch gekennzeichnet, daß der Verschiebekolben (29) eine unter einem spitzen Winkel zur Kolbenachse verlaufende Verschieberampe (32) trägt, an welcher eine am Betätungsschieber (40) ausgebildete, unter einem spitzen Winkel zu dessen Achse verlaufende Betätigungsfläche (41) anliegt und daß der Raststift (28) koaxial zum Verschiebekolben (29) angeordnet und über die Rückstellfeder (36) mit dem Verschiebekolben (29) gekoppelt ist, die sich mit radial nach außen gerichteter Rückstellkraft einerseits am Maschinengehäuse (10) und andererseits an einem am Raststift (28) befindlichen Federteller (30) abstützt.

3. Elektrische Handdrehwerkzeugmaschine nach Anspruch 2, dadurch gekennzeichnet, daß der Raststift (28) im Verschiebekolben (29) axial verschieblich geführt ist und daß sich zwischen dem Verschiebekolben (29) und dem Raststift (28) eine Druckfeder (33) abstützt, deren Federkraft größer ist als die der Rückstellfeder (36).

4. Elektrische Handdrehwerkzeugmaschine nach Anspruch 3, dadurch gekennzeichnet, daß der Federteller (30) einstückig an dem Raststift (28) angespritzt ist und gleichzeitig der Führung des Raststiftes (28) im Verschiebekolben (29) dient.

5. Elektrische Handdrehwerkzeugmaschine nach Anspruch 3 oder 4, dadurch gekennzeichnet, daß die Druckfeder (33) stirnseitig jeweils in einer Sackbohrung (34,35) im Verschiebekolben (29) einerseits und im Federteller (30) andererseits aufgenommen ist.

## Claims

1. Electric rotary hand tool (1), especially a hand-operated circular saw, having a rotary tool (14), especially a circular saw blade, which can be clamped on a drive spindle (13), having a drive motor, the output shaft (16) of which is coupled to the drive spindle (13) by means of a gear mechanism (12), having a machine housing (10) and having a manually activated spindle locking mechanism (24) for securing the drive spindle (13) whilst the rotary tool (14) is changed, which spindle-locking mechanism has a grooved disc (25), seated in a rotationally secure manner on the output shaft (16) or drive spindle (13) and having at least one latch groove (26, 27), and a displacement piston (29) in the style of a push-button, which can be operated by means of finger pressure and juts radially out of the machine housing (10), and a latch pin (28), which can be slid into the latch groove (26, 27) counter to a restoring spring (36), characterized in that, apart from the displacement piston (29), which serves as a first activating means for the spindle locking mechanism (24), there is held transversely thereto in an axially displaceable manner in the machine housing (10) an actuating slide (40), which protrudes over a mounting surface (15) on the machine housing (10) and serves as a second activating means for the spindle locking mechanism (24), and in that the actuating slide (40) is coupled to the latch pin (28) in such a way that, upon axial displacement of the actuating slide (40) to behind the mounting surface (15), when the latch groove is positionally aligned the latch pin (28) is slid into the latch groove (26, 27), so that the spindle locking mechanism can be actuated, according to choice, manually by means of the displacement piston (29) and/or by the natural weight of the rotary hand tool (1), by placing it onto a mounting surface.

2. Electric rotary hand tool according to Claim 1, characterized in that the displacement piston (29) bears a displacement ramp (32), which runs at an acute angle to the piston axis and is borne against by an actuating surface (41) formed on the actuating slide (40) and running at an acute angle to the axis of the latter, and in that the latch pin (28) is disposed coaxially to the displacement piston (29) and is coupled to the displacement piston (29) by means of the restoring spring (36), which is supported with a radially outward directed restoring force on the one hand against the machine housing (10) and on the other hand against a spring plate (30) located on the latch pin (28).

3. Electric rotary hand tool according to Claim 2, characterized in that the latch pin (28) is guided in an axially displaceable manner in the displacement piston (29) and in that a pressure spring (33) is supported between the displacement piston (29) and the latch pin (28), the spring force of which spring is greater than that of the restoring spring (36).

4. Electric rotary hand tool according to Claim 3, characterized in that the spring plate (30) is injection-moulded in one piece onto the latch pin (28) and simultaneously serves for guidance of the latch pin (28) in the displacement piston (29).

5. Electric rotary hand tool according to Claim 3 or 4, characterized in that the pressure spring (33) is received at the end faces in a respective blind hole (34, 35) in the displacement piston (29) on the one hand and in the spring plate (30) on the other hand.

## Revendications

1. Machine-outil rotative électrique portative (1), notamment scie circulaire portative comprenant un outil rotatif (14) serré sur une broche d'entraînement (13), notamment un disque de scie, un moteur dont l'axe de sortie (16) est couplé par une transmission (12) à la broche d'entraînement (13), un boîtier de machine (10) et un dispositif de blocage de broche (24) à commande manuelle pour bloquer la broche d'entraînement (13) et permettre le remplacement de l'outil rotatif (14), ce dispositif comprenant un disque à rainures (25) solidaire en rotation sur l'axe de sortie (16) ou la broche d'entraînement (13), ce disque ayant au moins une rainure de blocage (26, 27) ainsi qu'un piston coulissant (29) en forme de bouton-poussoir venant en saillie, radialement du boîtier (10) de la machine et qui peut se commander par la pression d'un doigt, et une tige de blocage 28 qui peut se glisser dans la rainure de blocage (26, 27) contre un ressort de rappel (36),
caractérisée en ce qu'
en plus du piston coulissant (29) qui sert de premier moyen de commutation du dispositif de blocage de broche (24), transversalement à celui-ci, il y a un coulisseau de manoeuvre (40) en saillie du boîtier (10) de la machine par rapport à sa surface d'appui (15), servant de second moyen de commutation du dispositif de blocage de broche (24), qui est maintenu coulissant axialement dans le boîtier (10) de la machine et
- le coulisseau de manoeuvre (40) est couplé à la tige de blocage (28) de façon qu'en cas de coulissement axial du coulisseau de manoeuvre (40) jusque derrière la surface d'appui (15), la tige de blocage (28), lorsque la position de la rainure de blocage est alignée, pénètre dans la rainure de blocage (26, 27) de sorte qu'au choix on peut mettre en oeuvre le dispositif de blocage de la broche manuellement par l'intermédiaire du piston coulissant (29) et/ou sous l'effet du poids propre de la machine (1) en posant celle-ci sur une surface d'appui.

2. Machine-outil rotative électrique portative selon la revendication 1,
caractérisée en ce que
le piston coulissant (29) présente une rampe de coulissement (32) faisant un angle aigu par rapport à l'axe du piston, et contre laquelle s'appuie une surface de manoeuvre (41) réalisée sur le coulisseau de manoeuvre (40) et faisant un angle aigu par rapport à son axe, et
- la tige de blocage (28) est coaxiale au piston coulissant (29) et est couplée par un ressort de rappel (36) au piston coulissant (29) qui s'appuie par sa force de rappel dirigée radialement vers l'extérieur, d'une part, contre le boîtier (10) de la machine, et, d'autre part, contre une coupelle à ressort (30) prévue sur la tige de blocage (28).

3. Machine-outil rotative portative électrique selon la revendication 2,
caractérisée en ce que
la tige de blocage (28) est guidée en coulissement axial dans le piston coulissant (29) et entre le piston coulissant (29) et la tige de blocage (28) s'appuie un ressort de compression (33) dont la force de ressort est supérieure à celle du ressort de rappel (36).

4. Machine-outil rotative portative électrique selon la revendication 3,
caractérisée en ce que
la coupelle de ressort (30) est réalisée en une seule pièce avec la tige de blocage (28) et sert en même temps à guider la tige de blocage (28) dans le piston coulissant (29).

5. Machine-outil rotative portative électrique selon la revendication 3 ou 4,
caractérisée en ce que
le ressort de compression (33) est logé par sa face frontale chaque fois dans un perçage borgne (34, 35), d'une part, dans le piston coulissant (29), et, d'autre part, dans la coupelle à ressort (30).
